# EUROPEAN PATENT APPLICATION

(11) **EP 3 354 622 A1**
(43) Date of publication of application: **01.08.2018**
(21) Application number: 17153420.9
(22) Date of filing: 26.01.2017
(51) Int. Cl.: C01F 11/18, C09C 1/02

(54) **PROCESS FOR THE PREPARATION OF FRAGMENTED NATURAL CALCIUM CARBONATE WITH A REDUCED CONTENT OF IMPURITIES AND PRODUCTS OBTAINED THEREOF**

(71) Applicant: Omya International AG, 4665 Oftringen (CH)
(72) Inventor: TAVAKKOLI, Bahman, 9722 Gummern (AT); RUHDORFER, David, 9584 Finkenstein (AT)
(74) Representative: Chwalka, Bettina

(57) **Abstract**

The present invention concerns a process for the preparation of fragmented natural calcium carbonate with a reduced content of impurities by use of a high voltage fragmentation apparatus, as well as products obtained thereof and their use. Furthermore, the present invention refers to the use of a high voltage fragmentation apparatus and a separation step for reducing impurities in at least one natural calcium carbonate and impurities containing material.

## Description

The present invention concerns a process for the preparation of fragmented natural calcium carbonate with a reduced content of impurities by use of a high voltage fragmentation apparatus, as well as products obtained thereof and their use. Furthermore, the present invention refers to the use of a high voltage fragmentation apparatus and a separation step for reducing impurities in at least one natural calcium carbonate and impurities containing material.

Natural calcium carbonate is one of the most commonly used additives in the paper, plastics, paint, coatings, concrete, cement, cosmetic, water treatment and/or agriculture industries. Especially, natural calcium carbonate is used in form of particles or pigments as filler and/or white pigment in several industrial relevant applications. For example, natural calcium carbonate is added as filler to paper, plastics concrete or cement to lower the consumption of the more expensive matrix material and/or to better at least some properties of the mixed material. Among the most important fillers, calcium carbonate holds the largest market volume and is mainly used in the plastics sector. Alternatively, natural calcium carbonate is added as white pigment to paper, paint, ink, plastic, cosmetics and other materials to colour these products by reflecting or transmitting light as the result of wavelength-selective absorption. For example, in the paper industry in Europe alone more than 10 million tonnes per year of white pigments, and especially calcium carbonate, are used.

Natural calcium carbonate is a common substance found in rocks, for example in marble, limestone or chalk and is the main component of pearls and the shells of marine organisms, snails, and eggs. Usually, natural calcium carbonate is obtained by mining. Afterwards the natural calcium carbonate has to be processed through a wet and/or dry treatment such as crushing, grinding, screening and fractionating, for example by a cyclone or classifier. By such processes the natural calcium carbonate that is usually mined in form of huge slabs, cuboids or chunks or in form of boulders, gravel or sand is shred and crushed and afterwards ground in order to obtain comminuted natural calcium carbonate that has the desired particle size for the respective application.

Since natural calcium carbonate is a product found in nature that is obtained by mining it usually contains impurities, which may affect the properties of the natural calcium carbonate particles and thus, lead to significant disadvantages in their use. Therefore, the impurities and the natural calcium carbonate have to be separated from one another to obtain a natural calcium carbonate that is not, or merely marginally, contaminated with impurities.

Processes and methods to shred, crush and grind mined stone/rock such as calcium carbonate as well as separation methods to obtain fragmented minerals with a reduced content or impurities are already known.

In EP 0 941 764 a method of crushing ore through use of a milling machine is disclosed wherein the method comprises the steps of: feeding ore and grinding members into the shell main unit and rotating the shell main unit; uniformly distributing the grinding members within the shell main unit through rotation of the shell main unit; and crushing the ore to crushed stone of predetermined size through rotation and drop of the grinding members.

EP 2 762 233 refers to a method and an apparatus for comminution of ore material or rock and/or in particular of slag, wherein the ore in combination with the use of water in a wet method, or even without the use of water in the dry method is pulverized. The pulverizer in EP 2 762 233 is constituted of at least two mutually movable grinding elements which form a milling chamber, wherein the ore is pulverized by a relative movement in the form of a rotation of at least one of the two crushing elements.

In DE 400 229 a method for wet milling is disclosed wherein ore is ground in a ball mill, characterized in that the ball mill contains the ore and beads or flints.

CN 105 268 532 refers to a combined crushing and grinding system which is particularly applied to the field of mineral separation techniques. The combined crushing and grinding system comprises a fine crushing device and an ore grinding device, wherein the fine crushing device is a high-pressure roller mill, and the ore grinding device is a horizontal type roller mill and the material output end of the high-pressure roller mill is connected with the material input end of the horizontal type roller mill.

US 4,671,464 refers to a method and apparatus of comminuting ore-like material to produce a disproportionately large volume of flakier product which is easily and more efficiently ground in a mill, wherein the method includes the application of a stream of liquid all around the inlet of a conical crusher, increasing the speed and reducing the throw of the crusher to produce a generally flaky product, crushing the ore in the presence of the liquid and passing the ore and liquid slurry directly to a grinding mill.

US 3,990,966 refers to a wet process for purifying calcite ore by grinding and forming a slurry of calcite ore, separating said impurities from the calcite slurry by flotation of the impurities therefrom in the presence of a flotation agent, classifying the resultant calcite slurry, settling the classified calcite in a thickener and drying the product.

CA 1 187 212 relates to a process for purifying carbonate ore containing silicates by flotation, wherein the ore is subjected to grinding to a fineness sufficient to release the impurities.

US 2013/200182 refers to process for obtaining apatite concentrates by froth flotation from phosphate ores with a substantially siliceous-carbonated matrix from igneous and sedimentary origin, which comprises: by crushing, grinding and desliming ore to create an ore pulp; conditioning the ore pulp with a collector reagent; applying carbon dioxide gas in at least part of a flotation circuit to achieve, with the carbon dioxide, at least one of: selective flotation for apatite and carbonates from silicates and other mineral gangues in rougher flotation and scavenger flotation steps; and selective apatite flotation from the carbonates in cleaner flotation and recleaner flotation steps.

US 2010/021370 refers to a method of enhancing recovery of value sulfide or precious minerals from an ore containing Mg-silicate, slime forming minerals, and/or clay by crushing the ore, grinding the ore, and subjecting the ground ore to a flotation process, in conjunction with the addition of at least one monovalent ion modifier enhancing agent and/or froth phase modifier agent to the ore.

US 4,663,279 refer to a method of beneficiation of complex sulfide ores comprises crushing and grinding complex sulfide ore containing sulfides of copper, zinc, iron and other minerals, subjecting the ground ores to differential flotation to obtain a bulk copper-zinc concentrate which is separate from pyrite and gangue, and passing the bulk copper-zinc concentrate through a high-gradient magnetic separator having an open-bore magnetic field filled with a matrix element, so as to recover separately a magnetic copper concentrate and a non-magnetic zinc concentrate.

The separation of valuable mineral like calcium carbonate from impurities is only possible if the particles in the ore and/or rocks are small enough such that the desired minerals like calcium carbonate and the impurities are present individually in the composition. In other words, the ore and/or rocks comprising the desired mineral and the impurities have to be comminuted before the separation such that the desired minerals and the impurities are liberated to a certain degree. The comminution in the prior art is usually done by grinding.

However, grinding of the impurities results in several disadvantages. A high amount of impurities such as, for example, silicates within the natural calcium carbonate might increase the abrasive properties and, therefore, might damage or destroy mills and/or grinding beads when milled/ground in order to reach the desired particle size distribution for the respective application. Furthermore, the impurities might induce discolouration such as, for example, greyness or yellowness to the end product that comprises the natural calcium carbonate particles. Generally, such a discoloration is greater and more striking if the impurities are also comminuted. Additionally, after grinding the natural calcium carbonate and the impurities together, both particle fractions have approximately the same particle size and, therefore, it is more difficult to separate the impurities from the natural calcium carbonate, especially by sieving or on a shaking table. Furthermore, after grinding the impurities these particles have a higher volume specific surface and thus, a higher amount of collector agents has to be used to separate the impurities from the comminuted natural calcium carbonate in a froth flotation process. In addition, many of the collector agents used so far are considered to be aquatic and environmental critical. Furthermore, grinding produces a high amount of fine grain, also of the valuable mineral. This fine grain may interfere with the subsequent separating step and might result, for example, in a substantial loss of fine grain in the tailings. Additionally, higher equipment effort as well as higher energy expenditure may be necessary to dewater the fine grain froth as well as the fine grain product slurry.

Therefore, there is a need for an improved process for producing fragmented natural calcium carbonate with a reduced content of impurities, which method avoids or reduces one or more of the problems described above in relation to the known methods. Such improved process for manufacturing fragmented natural calcium carbonate from a natural calcium carbonate and impurities containing material should especially reduce or avoid the damage or destruction of mills and/or grinding media. Furthermore, the discolouration of the end product that comprises the fragmented natural calcium carbonate particles should be reduced or avoided. Also the production of fine grain of the valuable material should be reduced or avoided. Additionally, the process should be an easy to handle and ecological process. Also the effectiveness should be satisfactory. At least some of the foregoing objects have been solved by the present invention.

According to one aspect of the present invention a process for the preparation of fragmented natural calcium carbonate with a reduced content of impurities is provided comprising the following steps:
i) providing at least one natural calcium carbonate and impurities containing material,
ii) optionally crushing the material of step i),
iii) providing an aqueous solvent,
iv) contacting the crushed material of step ii) or the material of step i) with the aqueous solvent of step iii) to prepare an aqueous composition,
v) subjecting the aqueous composition of step iv) to a high voltage pulse fragmentation by use of a high voltage fragmentation apparatus, wherein the applied voltage is in the range of 100 to 250 kV, the pulse rate is in the range of 0.2 to 7.0 Hz, the distance between the electrodes of the apparatus is in the range of 10 to 300 mm and between 100 to 700 pulses per kg natural calcium carbonate and impurities containing material are applied and
vi) separating, in one or more steps, the impurities from the fragmented aqueous composition to obtain fragmented natural calcium carbonate having a reduced content of impurities.

The inventors surprisingly found that the process for the preparation of fragmented natural calcium carbonate with a reduced content of impurities according to claim 1 is advantageous due to the high voltage pulse fragmentation processing with a high voltage fragmentation apparatus according to step v) of claim 1. The inventors surprisingly found that it is possible by the high voltage pulse fragmentation using the apparatus and the specific parameters as defined in claim 1 to comminute/fragment the crushed/shred natural calcium carbonate and impurities containing material to obtain particles, wherein the natural calcium carbonate particles and the impurities are at least partially liberated. Afterwards, the impurities are separated from the fragmented natural calcium carbonate and impurities containing material to obtain fragmented natural calcium carbonate having a reduced content of impurities. No grinding step has to be performed before separating the impurities from the fragmented aqueous natural calcium carbonate and impurities containing material to obtain fragmented natural calcium carbonate having a reduced content of impurities.

Thus, by the inventive process according to claim 1 fragmented natural calcium carbonate with a reduced impurities content can be prepared wherein the damage or destruction of mills and/or grinding beads is reduced or avoided. Furthermore, the discolouration of the end product that comprises the fragmented natural calcium carbonate particles can be reduced or avoided because the calcium carbonate and the impurities are not comminuted in a mill. Additionally, the inventive process is effective, easy to handle, and ecologic. Furthermore, the formation of fine grain is avoided or reduced. In particular, this is achieved by using a high voltage fragmentation apparatus, wherein the applied voltage is in the range of 100 to 250 kV, the pulse rate is in the range of 0.2 to 7.0 Hz, the distance between the electrodes of the apparatus is in the range of 10 to 300 mm and between 100 to 700 pulses per kg natural calcium carbonate and impurities containing material are applied in step v) of claim 1.

A second aspect of the present invention relates to fragmented natural calcium carbonate with a reduced content of impurities obtainable by the process as described in the present application.

A third aspect of the present invention relates to the use of the fragmented natural calcium carbonate with a reduced content of impurities obtainable by the inventive process in paper, plastics, paint, coatings, concrete, cement, cosmetic, water treatment and/or agriculture applications, wherein the fragmented natural calcium carbonate with a reduced content of impurities in paper is preferably used in a wet end process of a paper machine, in cigarette paper, board, and/or coating applications, or as a support for rotogravure and/or offset and/or ink jet printing and/or continuous ink jet printing and/or flexography and/or electrophotography and/or decoration surfaces.

A fourth aspect of the present invention relates to the use of a high voltage fragmentation apparatus for reducing impurities in at least one natural calcium carbonate and impurities containing material by subjecting said material to A) a high voltage pulse fragmentation by use of the high voltage fragmentation apparatus, wherein the applied voltage is in the range of 100 to 250 kV, the pulse rate is in the range of 0.2 to 7.0 Hz, the distance between the electrodes of the apparatus is in the range of 10 to 300 mm and between 100 to 700 pulses per kg natural calcium carbonate and impurities containing material are applied and B) separating, in one or more steps, the impurities from the fragmented natural calcium carbonate and impurities containing material to obtain fragmented natural calcium carbonate having a reduced content of impurities.

Advantageous embodiments of the present invention are defined in the corresponding sub-claims.

According to one embodiment, the material of step i) is not ground prior and during separation step vi).

According to another embodiment, the process comprises a further step vii) of grinding the fragmented natural calcium carbonate having a reduced content of impurities obtained from step vi) preferably in the presence of at least one grinding aid agent.

According to another embodiment, the amount of calcium carbonate in the natural calcium carbonate and impurities containing material of step a) is from 80.0 to 99.9 wt.-%, based on the dry weight of the natural calcium carbonate and impurities containing material, preferably from 90.0 to 99.5 wt.-%, more preferably from 95.0 to 99.3 wt.-% and most preferably from 98.0 to 99.0 wt.-%, based on the dry weight of the natural calcium carbonate and impurities containing material.

According to another embodiment, the crushing in step ii) is performed in one or more crushers selected from the group consisting of a jaw crusher, a gyratory crusher, a cone crusher, a compound crusher, an impact crusher, a hammer mill and a mineral sizer and preferably is performed in a jaw crusher.

According to another embodiment, the aqueous solvent of step iii) consists of water.

According to another embodiment a) the applied voltage is in the range of 120 to 220 kV, preferably in the range of 140 to 200 kV and most preferably in the range of 150 to 180 kV, and/or b) the pulse rate is in the range of 0.5 to 5.0 Hz, preferably in the range of 0.6 to 4.0 Hz and most preferably in the range of 0.9 to 3.0 Hz, and/or c) the distance between the electrodes of the apparatus is in the range of 15 to 200 mm, preferably in the range of 18 to 100 mm and most preferably in the range of 20 to 40 mm, and/or d) between 120 to 500 pulses per kg natural calcium carbonate and impurities containing material are applied, preferably between 140 to 400 and most preferably between 150 to 320.

According to another embodiment, the fragmented material obtained in step v) is in the form of particles having a top cut particle size *d*₉₈ of 100 to 3000 µm, preferably 200 to 2500 µm, and most preferably 250 to 2000 µm.

According to another embodiment, the separation in step vi) is performed in one or more separators selected from the group consisting of density separators, preferably rotating fluidized bed concentrators or shaking tables, froth flotators, sensor based sorters, preferably X-ray sorters, near infrared sorters or optical sorters, electrostatic separators and/or magnetic separators and preferably is performed in a froth flotator.

It should be understood that for the purposes of the present invention, the following terms have the following meanings:

A "natural calcium carbonate and impurities containing material" in the meaning of the present invention is a calcium carbonate-containing material obtained from natural sources such as, for example, marble, limestone, dolomite or chalk comprising calcium carbonate (CaCO₃) and impurities. The natural calcium carbonate and impurities containing material may have a minimum content of CaCO₃ of as low as 30 wt.-%, or 50 wt.-%, or 70 wt.-%, based on the total weight of the natural calcium carbonate and impurities containing material. The natural calcium carbonate and impurities containing material according to the present invention has not been milled and/or ground in a milling and/or grinding device either dry or alternatively wet before the separation step.

The terms "milling" and "grinding" as well as "milling devices" and "grinding devices" are known to the skilled person. In the meaning of the present invention milling and grinding refers to conditions, wherein the comminution of the milled or ground material predominantly results from impacts with a secondary body, i.e. in one or more of a autogenous mill, ball mill, a rod mill, a vibrating mill, a roll crusher, a centrifugal impact mill, a vertical bead mill, an attrition mill, a pin mill or other such equipment known to the skilled man. During milling and/or grinding the natural calcium carbonate and the impurities are comminuted more or less equally from top cut particle sizes *d*₉₈ of around 5 to 100 mm to top cut particle sizes *d*₉₈ of around 100 to 2000 µm. A natural calcium carbonate and impurities containing material with top cut particle sizes d₉₈ of around 5 to 100 mm is obtained by crushing and or shredding the natural calcium carbonate and impurities containing material that is usually mined in form of huge slabs, cuboids or chunks or in form of boulders, gravel or sand.

The terms "crushing" and "shredding" as well as "crushing devices" and "shredding devices" are known to the skilled person. In the meaning of the present invention crushing and shredding refers to conditions, wherein the comminution of the crushed or shredded material predominantly is obtained by holding the natural calcium carbonate and impurities containing material between two parallel or tangent solid surfaces of a crushing device and applying sufficient force to bring the surfaces together to generate enough energy within the material being crushed so that its molecules separate from (fracturing), or change alignment in relation to (deformation), each other. Crushing or shredding can be performed, for example, in a jaw crusher, a gyratory crusher, a cone crusher, a compound crusher, an impact crusher, a hammer mill, a mineral sizer or other such equipment known to the skilled person. A natural calcium carbonate and impurities containing material with top cut particle sizes d₉₈ of around 5 to 100 mm is obtained by crushing and or shredding the natural calcium carbonate and impurities containing material that is usually mined in form of huge slabs, cuboids or chunks or in form of boulders, gravel or sand. According to the present invention crushing and or shredding materials is different from grinding or milling materials.

"Impurities" in the meaning of the present invention are substances that differ from the chemical composition of calcium carbonate, which also includes other natural materials. The skilled person knows how to determine whether the chemical composition of a substance differs from the chemical composition of calcium carbonate. Common methods in the prior art are, for example, reflected light and incident light microscopy or X-ray powder diffraction.

A "reduced content of impurities" according to the present invention means that such a material comprises less impurities, based on the total weight of the material after separating these impurities compared to the same material before such a separating step.

A "fragmented" natural calcium carbonate in the meaning of the present invention refers to a natural calcium carbonate that has been comminuted by high voltage pulse fragmentation. "High voltage pulse fragmentation" in the meaning of the present invention is performed in a high voltage fragmentation apparatus that creates repetitive electrical discharges. The electrical energy is applied to materials immersed in a process liquid. Dielectric liquids, like water, have a high dielectric strength when voltage rise time is kept below 500 ns. As a result, discharges are forced through the immersed material. The introduced electrical energy is then transformed into an acoustical shockwave resulting into a huge tensile stress regime within the material. High voltage pulse fragmentation as well as apparatuses therefore are known to the skilled person and are commercially available, for example, from Selfrag AG, Switzerland.

Throughout the present document, the "particle size" of a natural calcium carbonate and impurities containing material, of natural calcium carbonate, impurities and other materials is described by its distribution of particle sizes. The value *d*ₓ represents the diameter relative to which *x* % by weight of the particles have diameters less than *d*ₓ. This means that the *d*₂₀ value is the particle size at which 20 wt.-% of all particles are smaller, and the *d*₇₅ value is the particle size at which 75 wt.-% of all particles are smaller. The *d*₅₀ value is thus the weight median particle size, i.e. 50 wt.-% of all grains are bigger and 50 wt.-% are smaller than this particle size. The *d*₉₈ value is the particle size at which 98 wt.-% of all particles are smaller than that particle size. The *d*₉₈ value is also designated as "top cut". For the purpose of the present invention the particle size is specified as top cut particle size *d*₉₈ unless indicated otherwise. Particle sizes were determined by sieving according to DIN 66165-1:2016-08 part 1 and part 2. Sieving is performed with test sieves with metal wire cloths according to ISO 3310-1:2001-09 part 1 (ISO 3310-1:2000).

An "aqueous composition" or "slurry" in the meaning of the present invention comprises insoluble solids and at least water as solvent or liquid, and optionally further additives, and usually contains large amounts of solids and, thus, is more viscous and can be of higher density than the liquid from which it is formed.

For the purpose of the present invention, the "solids content" of an aqueous composition is a measure of the amount of material remaining after all the solvent or water has been evaporated.

The term "separating" or a "separation process" in the meaning of the present invention refers to a method that converts a mixture of chemical substance like natural calcium carbonate and impurities into two or more distinct product mixtures, which may be referred to as mixture, at least one of which is enriched in one or more of the mixture's constituents. In some cases, a separation may fully divide the mixture into its pure constituents. The separations according to the present invention are based on differences of the chemical properties or physical properties of constituents of the mixture such as size, shape, mass, density, surface-color or chemical affinity, between the constituents of the mixture.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" even though such a limited understanding is always included by the terms "obtained" or "defined" as a preferred embodiment.

### Figures

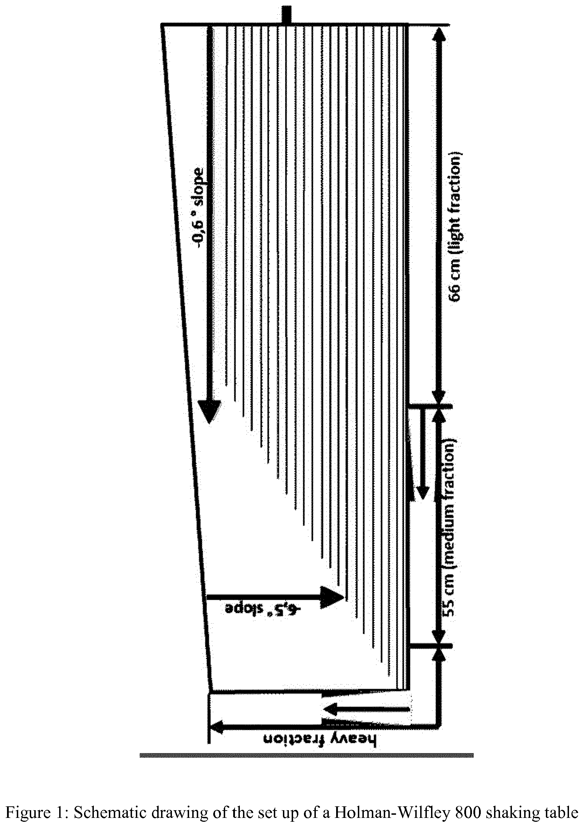

Figure 1 shows the schematic drawing of the set up of a Holman-Wilfley 800 shaking table

In the following, details and preferred embodiments of the process for the preparation of fragmented natural calcium carbonate with a reduced content of impurities will be set out in more detail. It is to be understood that these embodiments or details apply also for the fragmented natural calcium carbonate with a reduced content of impurities obtained by the inventive process and for the inventive use of the fragmented natural calcium carbonate with a reduced content of impurities also obtained by the inventive process. Furthermore, these embodiments or details apply also for the use of a high voltage fragmentation apparatus for reducing impurities in at least one natural calcium carbonate and impurities containing material according to the present invention.

### The natural calcium carbonate and impurities containing material

Step i) of the process of the invention refers to the provision of at least one natural calcium carbonate and impurities comprising mineral.

"Calcium carbonate" or "natural calcium carbonate" is understood to be a naturally occurring form of calcium carbonate, mined from sedimentary rocks such as limestone or chalk, or from metamorphic marble rocks. Calcium carbonate is known to exist as three types of crystal polymorphs: calcite, aragonite and vaterite. Calcite, the most common crystal polymorph, is considered to be the most stable crystal form of calcium carbonate. Less common is aragonite, which has a discrete or clustered needle orthorhombic crystal structure. Vaterite is the rarest calcium carbonate polymorph and is generally unstable. Calcium carbonate is almost exclusively of the calcitic polymorph, which is said to be trigonal-rhombohedral and represents the most stable of the calcium carbonate polymorphs. The term "source" of the calcium carbonate in the meaning of the present application refers to the naturally occurring mineral material from which the calcium carbonate is obtained. The source of the calcium carbonate may comprise further naturally occurring components such as magnesium carbonate, aluminium oxide etc. The source of calcium carbonate may be selected, for example, from marble, chalk, calcite, dolomite, limestone, or mixtures thereof.

According to one embodiment of the present invention the natural calcium carbonate and impurities containing material is selected from the group consisting of marble, chalk, limestone, dolomite and mixtures thereof and preferably is marble.

"Marble" in the meaning of the present invention is a calcium carbonate-comprising metamorphic rock composed of recrystallized carbonate minerals, most commonly calcite or dolomite.

"Chalk" in the meaning of the present invention is a soft, white, porous, sedimentary carbonate rock, composed of the mineral calcite.

"Limestone" in the meaning of the present invention is a sedimentary rock. Its major materials are the minerals calcite and aragonite.

"Dolomite" in the meaning of the present invention is a calcium carbonate-comprising rock. Its major materials are carbonic calcium-magnesium-minerals, having the chemical composition of CaMg(CO₃)₂ ("CaCO₃·MgCO₃"). A dolomite rock may contain at least 30.0 wt.-% MgCO₃, based on the total weight of dolomite, preferably more than 35.0 wt.-%, and more preferably more than 40.0 wt.-% MgCO_{3,}, ideally 45 to 46 wt.-% of MgCO₃.

Preferably, the natural calcium carbonate may consist of only one calcium carbonate. Alternatively, the natural calcium carbonate may consist of a mixture of two calcium carbonates selected from different sources of calcium carbonate. The natural calcium carbonate may also comprise a mixture of two or more calcium carbonates selected from different sources of calcium carbonate. For example, the natural calcium carbonate may comprise one calcium carbonate selected from dolomite and one natural calcium carbonate selected from calcite marble. According to one preferred embodiment of the present invention the natural calcium carbonate in the natural calcium carbonate and impurities containing material consist only of calcite marble.

The natural calcium carbonate and impurities containing material will contain natural calcium carbonate as defined above and impurities. "Impurities" in the meaning of the present invention are substances that differ from the chemical composition of calcium carbonate.

The impurities to be removed or reduced by the process according to the present invention are compounds that have, for example a grey, black, brown, red, or yellow colour or any other colour affecting the white appearance of the natural calcium carbonate and, therefore, may lead to discolouration of the end product that comprises the fragmented natural calcium carbonate particles. Alternatively, the impurities to be removed or reduced have a white colour but have different physical properties than the natural calcium carbonate and, therefore, adversely affect the natural calcium carbonate and thus, also the end products that comprise the natural calcium carbonate.

According to one embodiment of the present invention the impurities are selected from the group consisting of iron sulphides, iron oxides/hydroxide, graphite, silicates and mixtures thereof.

According to a preferred embodiment the starting material, e.g., the natural calcium carbonate and impurities containing material may comprise impurities selected from iron sulphides.

Iron sulphides or iron sulphates in the meaning of the present invention are understood to be chemical compounds of iron and sulphur comprising a wide range of stochiometric formulae and different crystalline structures. For example, the iron sulphide can be iron(II) sulphide FeS (magnetopyrite) or pyrrhotite Fe₁₋ₓS wherein x is from 0 to 0.2. The iron sulphide can also be an iron(II) disulphide FeS₂ (pyrite or marcasite). The iron sulphides can also contain other elements then iron and sulphur as for example nickel in the form of mackinawite (Fe, Ni)₁₊ₓS wherein x is from 0 to 0.1.

The impurities in the natural calcium carbonate and impurities containing material may also be iron oxides.

Iron oxides in the meaning of the present invention are understood to be chemical compounds composed of iron and oxide. Iron oxide comprises, for example iron(II) oxide FeO, also known as wüstite, iron(I,III) oxides Fe₃O₄, also known as magnetite and iron(III) oxide Fe₂O₃, also known as hematite. The iron oxides include also iron hydroxides and iron oxyhydroxides that contain beneath the elements iron and oxygen, the additional element hydrogen. Iron hydroxide comprises, for example iron(II) hydroxide Fe(OH)₂ and iron(III) hydroxide Fe(OH)₃, also known as bernalite. Iron oxyhydroxide comprises, for example α-FeOOH also known as goethite forming prismatic needle-like crystals, γ-FeOOH also known as lepidocrocite forming orthorhombic crystal structures, δ-FeOOH also known as feroxyhyte crystallizing in the hexagonal system and ferrihydrite FeOOH·0.4H₂O. The iron oxides can also contain additional elements as, for example, sulphur in Fe₈O₈(OH)₆(SO₄)·nH₂O also known as schwertmannite or chloride in FeO(OH,Cl) also known as akaganeite.

The natural calcium carbonate and impurities containing material may comprise impurities that are selected from graphite.

Graphite in the meaning of the present invention is understood to be an allotrope of carbon. There are three principal types of natural graphite: crystalline flake graphite, amorphous graphite and lump graphite. Crystalline flake graphite (or flake graphite for short) occurs as isolated, flat, plate-like particles with hexagonal edges if unbroken and, when broken, the edges can be irregular or angular. Amorphous graphite occurs as fine particles and is the result of thermal metamorphism of coal, the last stage of coalification, and is sometimes called meta-anthracite. Very fine flake graphite is sometimes called amorphous in the trade. Lump graphite (also called vein graphite) occurs in fissure veins or fractures and appears as massive platy intergrowths of fibrous or acicular crystalline aggregates.

Alternatively, the impurities in the white pigment and impurities containing material may be silicates. The silicates may be colouring or abrasive.

Silicates or silicate minerals in the meaning of the present invention are understood to be compounds that comprise silicon and oxygen. Additionally, the silicates can comprise further ions such as for example aluminium ions, magnesium ions, iron ions or calcium ions. The silicates and silicate minerals can be selected from neosilicates, sorosilicates, cyclosilicates, inosilicates, phyllosilicates, and tectosilicates and amorphous silicates. Neosilicates are silicate minerals in which the SiO₄ tetrahedra are isolated and have metal ions as neighbours. Commonly known neosilicates are zircon, willemite, olivine, mullite, forsterite, aluminosilicates or fayalite. Sorosilicates are silicate minerals which have isolated double tetrahedral groups with a silicon to oxygen ratio of 2:7. Commonly known sorosilicates are ilavite, gehlenite, epidote or kornerupine. Cyclosilicates are ring silicates that contain rings of linked SiO₄ tetrahedra wherein the silicon to oxygen ratio is 1:3. Commonly known cyclosilicates are benitonite, beryl or tourmaline. Inosilicates or chain silicates are silicate minerals which have interlocking chains of silicate tetrahedra with either SiO₃ in a 1:3 ratio for single chains or Si₄O₁₁ in a 4:11 ratio for double chains. Commonly known inosilicates are enstatite, wollastonite, rhodenite, diopside or amphibolite as for example grunerite, cummingtonite, actinolithe or hornblende. Phyllosilicates are sheet silicates that form parallel sheets of silicate tetrahedra with Si₂O₅ or a silicon oxygen ration of 2:5. Commonly known phyllosilicates are clay minerals, for example talc, kaoline, kaolinitic clay, halloysite, dickite, vermiculite, nontronite, sepiolite or montmorillonite, mica minerals, for example, biotite, muscovite, phlogopite, lepidolite or glauconite, or a chlorite mineral, for example clinochlore. Tectosilicates or framework silicates have a three-dimensional framework of silicate tetrahedra with SiO₂ tetrahedra or a silicon oxygen ration of 1:2. Commonly known tectosilicates are quartz minerals as for example quartz, tridymite and cristobalite, feldspar minerals as for example potassium feldspars comprising orthoclase and micro line, sodium or calcium feldspars comprising plagioclase, albite and andesine or scapolite and zeolithe. Amorphous silicates are for example diatomaceous earth or opale.

The silicate may be selected from the group consisting of quartz, a mica, an amphibolite, a feldspar, a clay mineral and mixtures thereof and preferably may be quartz.

The inventive process is especially contemplated for separating natural calcium carbonate from impurities that consist of quartz and/or additional silicates. For example, the impurity in the natural calcium carbonate and impurities containing material consists only of quartz. Alternatively, the impurity in the natural calcium carbonate and impurities containing material consists only of silicates, for example, mica and/or feldspar. According to a preferred embodiment the impurity in the natural calcium carbonate and impurities containing material consists of quartz, mica and feldspar.

Alternatively, the impurity or impurities in the natural calcium carbonate and impurities containing material may comprise silicates that have a white colour. For example, the impurities may comprise silicates such as wollastonite, kaolin, kaolinitic clay, montmorillonite, talc, diatomaceous earth or sepiolite. In a preferred embodiment of the invention, the impurity consists of silicates that have a white colour and more preferably the impurity consists of only one white coloured silicate. For example, the impurity may consist only of wollastonite, kaolin, kaolinitic clay, montmorillonite, talc, diatomaceous earth or sepiolite. These impurities obtained and separated according to the inventive method may be further processed and used in suitable applications. The impurities containing only white coloured silicates and, preferably containing only one white coloured silicate obtained by the inventive process may be used in the same way than the fragmented natural calcium carbonate with a reduced content of impurities.

According to one embodiment the natural calcium carbonate and impurities containing material comprises only one sort of impurities. Preferably the impurity is an iron sulphides or a silicate and preferably is selected from the group consisting of pyrite, quartz, mica, and feldspar.

According to another embodiment the natural calcium carbonate and impurities containing material comprises at least two different sorts of impurities. For example, the impurity comprises iron sulphides and silicate. According to a preferred embodiment of the present invention the natural calcium carbonate and impurities containing material comprises pyrite, quartz, mica, and feldspar.

The natural calcium carbonate and impurities containing material may comprise further substances, for example, organic contaminants like hydrocarbons that may comprise heteroatoms e.g., oxygen, sulphur, nitrogen. Such organic contaminants are, for example, anthraxolithe, shungite, anthraconite or chiastolite.

In a preferred embodiment of the present invention the natural calcium carbonate and impurities containing material consists only of natural calcium carbonate and impurities.

The amount of calcium carbonate in the natural calcium carbonate and impurities containing material of step i) may be from 30.0 to 99.9 wt.-%, or from 50.0 to 99.9 wt.-% or from 70.0 to 99.9 wt.-%, based on the dry weight of the natural calcium carbonate and impurities containing material.

In a preferred embodiment, the amount of calcium carbonate in the natural calcium carbonate and impurities containing material of step i) is from 80.0 to 99.9 wt.-%, based on the dry weight of the natural calcium carbonate and impurities containing material, preferably from 90.0 to 99.5 wt.-%, more preferably from 95.0 to 99.3 wt.-% and most preferably from 98.0 to 99.0 wt.-%, based on the dry weight of the natural calcium carbonate and impurities containing material.

According to another embodiment of the present invention, the amount of calcium carbonate : impurities in the natural calcium carbonate and impurities containing material of step 1) is from 30:70 to 99.9:0.1, based on the dry weight of the natural calcium carbonate and the impurities, or form 50:50 to 99.9:0.1 or from 70:30 to 99.9:0.1, based on the dry weight of the natural calcium carbonate and the impurities. Preferably the amount of calcium carbonate : impurities in the natural calcium carbonate and impurities containing material of step 1) is from 80.0:20.0 to 99.9:0.1, based on the dry weight of the natural calcium carbonate and the impurities, more preferably from 90.0:10.0 to 99.5: 0.5, even more preferably from 95.0:5.0 to 99.7:0.3, and most preferably from 98.0:2.0 to 99.0:1.0, based on the dry weight of the natural calcium carbonate and the impurities.

The total amount of the natural calcium carbonate and the impurities in the natural calcium carbonate and impurities containing material of step i) may represent at least 90 wt.-% relative to the total weight of the natural calcium carbonate and impurities containing material, preferably at least 95 wt.-%, more preferably at least 98 wt.-%, and most preferably at least 99 wt.-%, relative to the total weight of the natural calcium carbonate and impurities containing material.

### Crushing the natural calcium carbonate and impurities containing material

Step ii) of the process of the invention refers to optionally crushing the material of step i).

The natural calcium carbonate and impurities containing material according to the present invention may be obtained by mining and, therefore, may be in form of huge slabs, cuboids or chunks or in form of boulders, gravel or sand. In this case, this material has to be further comminuted before subjecting it to the high voltage pulse fragmentation of step v).

"Crushing" is known to the skilled person and refers to conditions, wherein the comminution of the crushed material predominantly is obtained by holding the natural calcium carbonate and impurities containing material between two parallel or tangent solid surfaces of a crushing device and applying sufficient force to bring the surfaces together to generate enough energy within the material being crushed so that its molecules separate from (fracturing), or change alignment in relation to (deformation), each other.

Crushing devices are known to the skilled person and are commercial available. According to one embodiment of the present invention the crushing is performed in one or more crushers selected from the group consisting of a jaw crusher, a gyratory crusher, a cone crusher, a compound crusher, an impact crusher, a hammer mill, and a mineral sizer and preferably is performed in a jaw crusher.

A jaw crusher uses compressive force for breaking of particles, wherein this mechanical pressure is achieved by the two jaws of the crusher of which one is fixed while the other reciprocates. A jaw or toggle crusher consists of a set of vertical jaws, one jaw is kept stationary and is called a fixed jaw while the other jaw called a swing jaw, moves back and forth relative to it, by a cam or pitman mechanism. Jaw crushers are, for example, available from metso, Germany under the trade name C120 or from Aubema, Sweden under the trade name CJ613 or from Ambica, India.

A gyratory crusher is similar in basic concept to a jaw crusher, consisting of a concave surface and a conical head, both surfaces are typically lined with manganese steel surfaces. The inner cone has a slight circular movement, but does not rotate. Instead the movement is generated by an eccentric arrangement. Gyratory crushers are, for example, available from Thyssen Krupp, Germany under the trade name KB 54-67, KB 54-75 or KB 63-114.

A cone crusher is similar in operation to a gyratory crusher, with less steepness in the crushing chamber and more of a parallel zone between crushing zones. A cone crusher breaks rock by squeezing the rock between an eccentrically gyrating spindle, which is covered by a wear-resistant mantle, and the enclosing concave hopper, covered by a manganese concave or a bowl liner. Cone crusher can be divided into four types, namely compound cone crusher, spring cone crusher, hydraulic cone crusher and gyratory crusher. Cone crushers are, for example, available from Westpro, Canada under the trade name CSH900, NCC1200 or CF900.

A compound crusher is a double rotor primary impact crusher with a high capacity crushing chamber, fixed striking blade, two impact plates and one grinding path arranged effectively around the rotor enabled to achieve high reduction ratio with high capacity. Compound crushers are, for example, available from Earth Technica Co., LTD., Japan under the trade name AP-6C, AP-7BrC or AP-7SC.

An impact crusher involves the use of impact rather than pressure to crush material. The material is contained within a cage, with openings on the bottom, end, or side of the desired size to allow pulverized material to escape. There are two types of impact crushers: horizontal shaft impactor and vertical shaft impactor. Impact crushers are, for example, available from Stedman, US under the trade name Mega-Slam MS4230 or Mega-Slam MS6490.

A hammermill is a mill whose purpose is to shred or crush aggregate material into smaller pieces by the repeated blows of little hammers. Hammer mill are, for example, available from Schutte Buffalo, US under the trade name 18 series Circ-U-Flow Hammer Mill or 44 series Circ-U-Flow Hammer Mill.

The basic concept of a mineral sizer is the use of two rotors with large teeth, on small diameter shafts, driven at a low speed by a direct high torque drive system. This design produces three major principles which all interact when breaking materials using sizer technology. The unique principles are the three-stage breaking action, the rotating screen effect, and the deep scroll tooth pattern. Mineral sizer are, for example, available from Mining Machinery Developments (MMD), UK under the trade name 500 series, 1000 series or 1500 series.

By crushing the the natural calcium carbonate and impurities containing material that is usually mined in form of huge slabs, cuboids or chunks or in form of boulders, gravel or sand a natural calcium carbonate and impurities containing material with a top cut particle sizes *d*₉₈ of around 5 to 100 mm is obtained. The natural calcium carbonate and impurities containing material obtained after step ii) may have a top cut particle sizes *d*₉₈ preferably in the range of from 5 to 80 mm, more preferably of from 5 to 60 mm, and most preferably of from 5 to 50 mm.

However, in the case that the mined natural calcium carbonate and impurities containing material has already a top cut particle sizes *d*₉₈ of around 5 to 100 mm the crushing step is not necessary. In such a case the process according to claim 1 is performed without the crushing step ii).

According to a preferred embodiment of the present invention natural calcium carbonate and impurities containing material has a top cut particle sizes *d*₉₈ of above 100 mm and, therefore, the crushing step ii) is mandatory.

According to the present invention the natural calcium carbonate and impurities containing material of step i) is not ground prior or during separation step vi).

According to the present invention crushing and or shredding materials is different from grinding or milling materials.

"Milling" or "grinding" in the meaning of the present invention refer to conditions, wherein the comminution of the milled or ground material predominantly results from impacts with a secondary body. During milling and/or grinding the natural calcium carbonate and the impurities are comminuted more or less equally from top cut particle sizes *d*₉₈ of around 5 to 100 mm to top cut particle sizes *d*₉₈ of around 100 to 2000 µm. A natural calcium carbonate and impurities containing material with top cut particle sizes *d*₉₈ of around 5 to 100 mm is obtained by crushing and or shredding the natural calcium carbonate and impurities containing material that is usually mined in form of huge slabs, cuboids or chunks or in form of boulders, gravel or sand.

Milling or grinding is known to the skilled person and can be carried out with any conventional grinding device, i.e. in one or more of: an autogenous mill, a ball mill, a rod mill, a vibrating mill, a roll crusher, a centrifugal impact mill, a vertical bead mill, an attrition mill, a pin mill, a hammer mill or other such equipment known to the skilled man. In case calcium carbonate containing mineral powder comprises a wet ground calcium carbonate containing mineral material, the grinding step may be performed under conditions such that autogenous grinding takes place and/or by horizontal ball milling, and/or other such processes known to the skilled man. Milling or grinding can be performed either dry or alternatively wet.

### Providing an aqueous solvent

According to process step iii) of the present invention an aqueous solvent is provided.

An "aqueous solvent" according to the present invention is a solution that comprises water and optionally further solvents that are miscible with water. Preferably, the optional further solvents are non-combustible.

The water of the present invention may be processing water or demineralized water. According to a preferred embodiment the water is demineralized water. "Demineralized water" or "deionized water" in the meaning of the present invention refers to water that has almost all of its mineral ions removed, such as cations like sodium, calcium, iron, and copper, and anions such as chloride and sulfate. The skilled person knows how to prepare demineralized water.

According to a preferred embodiment of the present invention the aqueous solvent of step iii) consists of water.

### Contacting the crushed material to prepare an aqueous composition

According to step (iv) of the present invention, the crushed material of step (ii) or the material of step (i) is contacted with the aqueous solvent of step (iii), to prepare an aqueous composition.

The contacting may be done in one or several steps to form an aqueous composition or mixture.

According to one embodiment of the present invention, step (iv) comprises the steps of providing the crushed material of step (ii) or the material of step (i) in a first step, and subsequently adding the aqueous solvent of step (iii). According to another embodiment of the present invention, step (iv) comprises the steps of providing the aqueous solvent of step (iii) in a first step, and subsequently adding the crushed material of step (ii) or the material of step (i). According to still another embodiment, the at least one crushed material of step (ii) or the material of step (i) and the aqueous solvent of step (iii) are contacted simultaneously. According to a preferred embodiment step (iv) comprises the steps of providing the crushed material of step (ii), namely the crushed natural calcium carbonate and impurities containing material, or the material of step (i) in a first step, and subsequently adding the aqueous solvent of step (iii).

It is possible to add the aqueous solvent of step (iii) in a constant flow. Alternatively, the aqueous solvent of step (iii) may be added to the crushed material of step (ii) or the material of step (i) in one step. It is also possible to add the aqueous solvent of step (iii) to the crushed material of step (ii) or the material of step (i) in more than one step. Alternatively, it is also possible to add the aqueous solvent of step (iii) to the crushed material of step (ii) or the material of step (i) in unequal portions, i.e. in larger and smaller portions.

According to another embodiment, step (iv) consist of contacting the crushed material of step (ii) or the material of step (i) with the aqueous solvent of step (iii), in one or several steps, to obtain an aqueous composition.

The contacting step (iv) can be carried out by any means known in the art. For example, the crushed material of step (ii) or the material of step (i) and the aqueous solvent of step (iii) can be brought into contact by spraying and/or mixing. Suitable process equipment for spraying or mixing is known to the skilled person.

According to one embodiment of the present invention, process step (iv) is carried out by spraying. According to another embodiment of the present invention, process step (iv) is carried out by mixing.

The mixing in step (iv) can be accomplished by any conventional means known to the skilled person. The skilled person will adapt the mixing conditions such as the mixing speed and temperature according to his process equipment. Additionally, the mixing may be carried out under homogenizing conditions.

For example, the mixing and homogenizing may take place by means of a ploughshare mixer. Ploughshare mixers function by the principle of a fluidized bed produced mechanically. Ploughshare blades rotate close to the inside wall of a horizontal cylindrical drum and convey the components of the mixture out of the product bed and into the open mixing space. The fluidized bed produced mechanically ensures intense mixing of even large batches in a very short time. Choppers and/or dispersers are used to disperse lumps in a dry operation. Equipment that may be used in the inventive process is available, for example, from Gebrüder Lödige Maschinenbau GmbH, Germany or from VISCO JET Rührsysteme GmbH, Germany.

According to another embodiment of the present invention step iv) is carried out for at least 1 s, preferably for at least 1 min, e.g. for at least 10 min, 15 min, 30 min, 45 min or 60 min. According to a preferred embodiment step iv) is carried out for a period of time ranging from 1 second to 60 minutes, for example, for 30 seconds, or for 1 minute or for 2 minutes and preferably for a period of time ranging from 15 minutes to 45 minutes. For example, the mixing step iv) is carried out for 30 minutes ±5 minutes.

According to a preferred embodiment of the present invention step iv) is carried out at a temperature in the range from 20 to 120°C and/or for a period of time ranging from 1 second to 60 minutes, for example for 30 seconds, or for 1 minute or for 2 minutes.

It is also within the confines of the present invention that additional water may be introduced during process step (iv), for example, in order to control and/or maintain and/or achieve the desired solids content or Brookfield viscosity of the obtained mixture. According to one embodiment the aqueous composition obtained in step iv) has a solids content from 50 to 80 wt.-%, based on the total weight of the aqueous composition, preferably from 55 to 75 wt.-% and most preferably from 60 to 70 wt.-%, based on the total weight of the aqueous composition. The Brookfield viscosity of the obtained aqueous composition may be from 10 to 10 000 mPa·s, preferably from 50 to 1 000 mPa·s.

### High voltage pulse fragmentation

According to step v) of the present invention the aqueous composition of step iv) is subjected to a high voltage pulse fragmentation by use of a high voltage fragmentation apparatus, wherein the applied voltage is in the range of 100 to 250 kV, the pulse rate is in the range of 0.2 to 7.0 Hz, the distance between the electrodes of the apparatus is in the range of 10 to 300 mm and between 100 to 700 pulses per kg natural calcium carbonate and impurities containing material are applied. By such a procedure a fragmented natural calcium carbonate and impurities containing material is obtained.

"High voltage pulse fragmentation" as well as apparatus therefore are known to the skilled person and are commercially available. More precisely, high voltage pulse fragmentation is a technology that allows liberation or weakening of material along mineral or phase boundaries and, therefore, allows for controlled selective fragmentation without contamination due to a combination of pulse power technology, physical (electrical) material discontinuities and high voltage and mechanical engineering skills. The high voltage fragmentation apparatus creates repetitive electrical discharges. The electrical energy is applied to the aqueous composition of step iv) comprising the (crushed) natural calcium carbonate and impurities containing material immersed in an aqueous solvent. Dielectric liquids, like water, have a high dielectric strength when voltage rise time is kept below 500 ns. As a result, discharges are forced through the crushed natural calcium carbonate and impurities containing material. The introduced electrical energy is then transformed into an acoustical shockwave resulting into a huge tensile stress regime within the crushed natural calcium carbonate and impurities containing material.

The impurities in the (crushed) natural calcium carbonate and impurities containing material as well as defects, for example crystalline defects in the (crushed) natural calcium carbonate and impurities containing material may lead to discontinuity in the electrical and acoustical properties of such a material. The discontinuity in the dielectric permittivity enhances the electrical field at the grain boundaries and forces the discharge channels to the boundaries. The sudden expansion of the created plasma produces a shock wave with local pressures up to 10000 bar. The interaction of a shock wave and an acoustical discontinuity, concentrate tensile stress at these interfaces.

The high voltage pulse fragmentation uses these effects to liberate material along the mineral or phase boundaries, to weaken material along particle boundaries or to diminish the size of material without introducing contamination. High voltage pulse fragmentation is also known under the heading of" electrical pulse fragmentation" or "electrical pulse disaggregation".

In principle, a high voltage fragmentation apparatus comprises a container for the material to be fragmented, at least two electrodes within the container as well as equipment to produce pulsed high voltage.

According to step v) of the present invention the aqueous composition of step iv) is subjected to a high voltage pulse fragmentation by use of a high voltage fragmentation apparatus, wherein the applied voltage is in the range of 100 to 250 kV. In a preferred embodiment the applied voltage is in the range of 120 to 220 kV, more preferably in the range of 140 to 200 kV and most preferably in the range of 150 to 180 kV.

According to the present invention the pulse rate is in the range of 0.2 to 7.0 Hz. In a preferred embodiment the pulse rate is in the range of 0.5 to 5.0 Hz, more preferably in the range of 0.6 to 4.0 Hz and most preferably in the range of 0.9 to 3.0 Hz. The "pulse rate" in the meaning of the present invention is measured in Hz. The term "pulse rate" is used synonymous with the term "frequency" according to the present invention.

According to the present invention the distance between the electrodes of the apparatus is in the range of 10 to 300 mm. According to a preferred embodiment the distance between the electrodes of the apparatus is in the range of 15 to 200 mm, more preferably in the range of 18 to 100 mm and most preferably in the range of 20 to 40 mm.

According to the present invention between 100 to 700 pulses per kg natural calcium carbonate and impurities containing material are applied. According to a preferred embodiment between 120 to 500 pulses per kg natural calcium carbonate and impurities containing material are applied, more preferably between 140 to 400 and most preferably between 150 to 320.

According to one embodiment of the present invention a) the applied voltage is in the range of 120 to 220 kV, preferably in the range of 140 to 200 kV and most preferably in the range of 150 to 180 kV, or b) the pulse rate is in the range of 0.5 to 5.0 Hz, preferably in the range of 0.6 to 4.0 Hz and most preferably in the range of 0.9 to 3.0 Hz, or c) the distance between the electrodes of the apparatus is in the range of 15 to 200 mm, preferably in the range of 18 to 100 mm and most preferably in the range of 20 to 40 mm, or d) between 120 to 500 pulses per kg natural calcium carbonate and impurities containing material are applied, preferably between 140 to 400 and most preferably between 150 to 320.

According to another embodiment of the present invention a) the applied voltage is in the range of 120 to 220 kV, preferably in the range of 140 to 200 kV and most preferably in the range of 150 to 180 kV, and b) the pulse rate is in the range of 0.5 to 5.0 Hz, preferably in the range of 0.6 to 4.0 Hz and most preferably in the range of 0.9 to 3.0 Hz, and c) the distance between the electrodes of the apparatus is in the range of 15 to 200 mm, preferably in the range of 18 to 100 mm and most preferably in the range of 20 to 40 mm, and d) between 120 to 500 pulses per kg natural calcium carbonate and impurities containing material are applied, preferably between 140 to 400 and most preferably between 150 to 320.

According to one embodiment of the present invention the parameters of the high voltage pulse fragmentation may be amended during step v). For example, the distance between the electrodes of the apparatus may be reduced during step v). According to one exemplified embodiment of the present invention the distance between the electrodes of the apparatus at the begging of step v) is 40 mm. During step v) the distance between the electrodes of the apparatus is reduced to 30 mm and finally to 20 mm. The reduction may be a continuous process or may be performed in several steps, for example in two or more steps, e.g. three, four or five steps.

High voltage pulse fragmentation as well as apparatuses therefore are known to the skilled person and are commercially available, for example, from Selfrag AG, Switzerland.

According to an exemplified embodiment of the present invention a Selfrag Lab S2.1 Labor Fragmentieranlage apparatus is used, wherein the applied voltage is 170 kV, the pulse rate is 2.0 Hz, the distance between the electrodes of the apparatus is at the beginning of step v) 40 mm then reduced to 30 mm and finally reduced to 20 mm and 160 pulses per kg natural calcium carbonate and impurities containing material are applied.

According to another exemplified embodiment of the present invention a Selfrag Lab S2.1 Labor Fragmentieranlage apparatus is used, wherein the applied voltage is 160 kV, the pulse rate is 1.0 Hz, the distance between the electrodes of the apparatus is at the beginning of step v) 40 mm then reduced to 30 mm and finally reduced to 20 mm and 300 pulses per kg natural calcium carbonate and impurities containing material are applied.

By such a procedure a fragmented natural calcium carbonate and impurities containing material is obtained. According to one embodiment of the present invention the fragmented material obtained in step v) is in the form of particles having a top cut particle size *d*₉₈ of 100 to 3000 µm, preferably 200 to 2500 µm, and most preferably 250 to 2000 µm.

### Separating the impurities from the fragmented aqueous composition

According to step vi) of the present invention, the impurities are separated, in one or more steps from the fragmented aqueous composition to obtain fragmented natural calcium carbonate having a reduced content of impurities. A "reduced content of impurities" according to the present invention means that such a material comprises less impurities, based on the total weight of the material after separating these impurities compared to the same material before such a separating step.

Separating devices are known to the skilled person and are commercial available. According to one embodiment of the present invention the separation in step vi) is performed in one or more separators selected from the group consisting of density separators, preferably rotating fluidized bed concentrators or shaking tables, froth flotators, sensor based sorters, preferably X-ray sorters, near infrared sorters or optical sorters, electrostatic separators and/or magnetic separators and preferably is performed in a froth flotator.

Density separation is based on the principle that different minerals may have different densities. Depending on the specific gravity of these materials it is possible to separate them. Density separators are, for example, rotating fluidized bed concentrators or shaking tables. Other known density separators are, for example, air tables, spiral classifiers, hydrocyclones or jigs.

A rotating fluidized bed concentrator is a rapidly spinning bowl that is fed at its center of rotation. It uses centrifugal force to separate particles that are transported in a thin liquid film that flows upward along the inclined wall of the bowl. Due to differential settling, dense and coarse particles are concentrated inside the bowl whereas light and fine particles are rejected with the overflow stream. The fast rotation speed of the bowl yields a high centrifugal force several hundred times the force of gravity. At the bottom of the bowl, an impeller transmits the bowl rotation to the feed, which drains upward by centrifugal force as soon as it hits the base of the spinning bowl. Rotating fluidized bed concentrators are, for example, available from Falcon Concentrators Inc., UK under the trade name Falcon L40.

According to one exemplified embodiment of the present invention the separating device is a rotating fluidized bed concentrator, preferably a Falcon L40, that is operated with drum rotational speed equivalent to centrifugal acceleration of 200 g, a slurry feed flow of about 2 l/min and a fluidization water flow of about 4 l/min.

Shaking tables are thin film, shear flow process equipment that separates particle grains of its feed material based on the differences in their specific gravity, density, size and shape. The table's deck has a reciprocal movement along its main axis that is given using a vibrator or an eccentric head motion and the table surface is manufactured and fitted with several tapered strips called riffles or grooves. Shaking tables are, for example, available from Holman-Wilfley, UK, under the trade name Holman 800.

According to an exemplified embodiment of the present invention the separating device is a shaking table, preferably a Holman 800, that has a slope in the axial direction of about -0.6°, a slope in transversal direction of about -6.5° as well as splitter plates for three outlet streams and is operated at a dry powder feed rate of about 56 g/min and a total water flow rate of about 10.7 l/min.

Froth flotators are apparatuses like rectangular or cylindrical mechanically agitated cells or tanks, flotation columns, Jameson Cells or deinking flotation machines wherein froth flotation can be performed. Classified by the method of air absorption manner, two distinct groups of flotation equipments have arisen, pneumatic and mechanical machines. Froth flotators are, for example, available from Outotec, Finland, under the trade name SkimAir flotation unit or Tankcell.

The flotation process can be a conventional flotation process or a reverse flotation process. A "conventional flotation process" or a "direct flotation process" in the meaning of the present invention is a flotation process in which the desirable natural calcium carbonate particles are directly floated and collected from the produced froth leaving behind a suspension containing the impurities. A "reverse flotation process" or "indirect flotation process" in the meaning of the present invention is a flotation process in which the impurities are directly floated and collected from the produced froth leaving behind a suspension containing the desired natural calcium carbonate particles. According to an exemplified embodiment of the present invention the flotation process is a reverse flotation process. Furthermore, a collector agent may be used in the froth flotation process. A "collector agent" in the meaning of the present invention is a chemical compound that is adsorbed by the envisaged particles either by chemisorption or by physisorption. The collector agent renders the surface of the impurities more hydrophobic. Collector agents are known to the skilled person and are commercial available.

Sensor based sorting machines are sorting machines, wherein the particles are singularly detected by a sensor technique and then are rejected by an amplified mechanical, hydraulic or pneumatic process. Preferred sensor based sorting machines according to the present invention are X-ray sorters, near infrared sorters or optical sorters. X-ray sorters are, for example, available from Steinert, US, under the trade name Steinert XSS T. Near infrared sorters are, for example, available from Steinert, US, under the trade name Steinert NIS.

Electrostatic separators are device for separating particles by mass in a low energy charged beam. The working principle of an electrostatic separator is a corona discharge, where two plates are placed close together and high voltage is applied. This high voltage is used to separate the ionized particles. Electrostatic separators are, for example, available from Hamos, Germany, under the trade name hamos EMS or hamos KMS.

By a magnetic separator magnetically susceptible materials can be extracted from a mixture using magnetic force. Magnetic separators are, for example, available from Hamos, Germany, under the trade name hamos HS or hamos FFS.

The inventors surprisingly found that by the process according to claim 1 it is possible to prepare fragmented natural calcium carbonate with a reduced content of impurities. The combination of optionally crushing at least one natural calcium carbonate and impurities containing material, contacting the (crushed) material with an aqueous solvent, subjecting the obtained aqueous composition to a high voltage pulse fragmentation by use of a high voltage fragmentation apparatus and afterwards separating the impurities from the fragmented aqueous composition to obtain fragmented natural calcium carbonate having a reduced content of impurities is advantageous since no grinding step has to be performed before separating the impurities from the fragmented aqueous natural calcium carbonate and impurities containing material to obtain fragmented natural calcium carbonate having a reduced content of impurities. Thus, by the inventive process according to claim 1 fragmented natural calcium carbonate with a reduced impurities content can be prepared wherein the damage or destruction of mills and/or grinding beads is reduced or avoided. Furthermore, the discolouration of the end product that comprises the fragmented natural calcium carbonate particles can be reduced or avoided. Because the natural calcium carbonate and impurities containing material are not comminuted in a mill. Additionally, the inventive process is an easy to handle and ecological process and the effectiveness is satisfactory. By the inventive process also the formation of fine grain may be avoided or reduced.

The amount of impurities in the fragmented natural calcium carbonate obtained after separating step vi) is reduced. More precisely the amount of impurities in the fragmented natural calcium carbonate having a reduced content of impurities obtained in step vi) is at least 0.5 wt.-%, preferably at least 1 wt.-%, more preferably at least 2 wt.-%, even more preferably at least wt.-5 % and most preferably at least 10 wt.-% lower than the amount of impurities in the material provided in step i). For example, the amount of impurities in the fragmented natural calcium carbonate having a reduced content of impurities obtained in step vi) is between 0.5 wt.-% and 40 wt.-%, preferably between 1 wt.-% and 35 wt.-%, more preferably between 5 wt.-% and 32 wt.-%, even more preferably between 10 wt.-% and 25 wt.-% and most preferably between 15 wt.-% to 25 wt.-% lower than the amount of impurities in the material provided in step i). However, in one embodiment the amount of impurities in the fragmented natural calcium carbonate having a reduced content of impurities obtained in step vi) is at least 50 wt.-% lower than the amount of impurities in the material provided in step i).

Impurities might induce discolouration such as, for example, greyness or yellowness to the end product that comprises the fragmented natural calcium carbonate particles. Since the amount of impurities is reduced in the fragmented natural calcium carbonate obtained by the process according to the present invention also the discoloration in the obtained fragmented natural calcium carbonate with a reduced content of impurities as well as in the end product may be reduced.

According to one embodiment of the present invention, the TAPPI brightness of the fragmented natural calcium carbonate having a reduced content of impurities obtained in step vi) is improved. More precisely the TAPPI brightness of the fragmented natural calcium carbonate having a reduced content of impurities obtained in step vi) is at least 2 %, preferably at least 5 % and more preferably at least 10 % higher than the TAPPI brightness of the material provided in step i).

According to another embodiment of the present invention, the yellow index of the fragmented natural calcium carbonate having a reduced content of impurities obtained in step vi) is reduced. More precisely the yellow index of the fragmented natural calcium carbonate having a reduced content of impurities obtained in step vi) is at least 2 %, preferably at least 5 % and more preferably at least 10 % lower than the yellow index of the material provided in step i).

### Additional process steps

According to one embodiment, the process of the present invention comprises a further step vii) of grinding the fragmented natural calcium carbonate having a reduced content of impurities obtained from step vi) preferably in the presence of at least one grinding aid agent. Thus, a process for the preparation of a fragmented natural calcium carbonate with a reduced content of impurities may comprise the following steps:
i) providing at least one natural calcium carbonate and impurities containing material,
ii) optionally crushing the material of step i),
iii) providing an aqueous solvent,
iv) contacting the crushed material of step ii) or the material of step i) with the aqueous solvent of step iii) to prepare an aqueous composition,
v) subjecting the aqueous composition of step iv) to a high voltage pulse fragmentation by use of a high voltage fragmentation apparatus, wherein the applied voltage is in the range of 100 to 250 kV, the pulse rate is in the range of 0.2 to 7.0 Hz, the distance between the electrodes of the apparatus is in the range of 10 to 300 mm and between 100 to 700 pulses per kg natural calcium carbonate and impurities containing material are applied and
vi) separating, in one or more steps, the impurities from the fragmented aqueous composition to obtain fragmented natural calcium carbonate having a reduced content of impurities and
vii) grinding the fragmented natural calcium carbonate having a reduced content of impurities obtained from step vi) preferably in the presence of at least one grinding aid agent.

The grinding step may be undertaken by all the techniques and grinders well known to the person skilled in the art. The grinding step may be carried out with a conventional grinding device, for example, under conditions such that comminution predominantly results from impacts with a secondary body, i.e. in one or more of: an autogenous mill, a ball mill, a rod mill, a vibrating mill, a centrifugal impact mill, a vertical bead mill, an attrition mill, or other such equipment known to the skilled person. The grinding step may be carried out in batch or continuously, preferably continuously.

According to a preferred embodiment a grinding aid agent may be added during step vii). The grinding aid agent may be a non-ionic or cationic grinding aid, such as glycol or alkanolamines, respectively. When present, these grinding aid agents are generally in an amount of from 0.1 to 5 mg/m², relative to the surface area of the fragmented natural calcium carbonate with a reduced content of impurities.

According to another embodiment of the present invention one or more additives may be added to the aqueous suspension prior to, during or after step vi). Possible additives are, for example pH-adjusting agents, solvents (water, organic solvent(s) and mixtures thereof); depressants, such as starch, quebracho, tannin, dextrin and guar gum, and polyelectrolytes, such as polyphosphates and water glass, which have a dispersant effect, often combined with a depressant effect. Other conventional additives that are known are frothers (foaming agents), such as methyl isobutyl carbinol, triethoxy butane, pine oil, terpineol and polypropylene oxide and its alkyl ethers, among which methyl isobutyl carbinol, triethoxy butane, pine oil, terpineol, are preferred frothers. According to a preferred embodiment the additives are selected from the group comprising pH-adjusting agents, solvents, depressants, polyelectrolytes, frothers, collector agents and mixtures thereof.

According to another embodiment of the present invention the process according to the present invention comprises a further step viii) of screening after optional step ii) or step i) and preferably before step iii) by use of one or more screens having an aperture size of 150 mm or finer, preferably from 100 to 10 mm, more preferably from 80 to 20 mm, and most preferably from 70 to 30 mm and removing one or more oversize fractions retained by said screen. For example, one or more screens having an aperture size of 40 mm is/are used and the oversize fractions retained by said screen/s is/are removed.

According to another embodiment of the present invention the process according to the present invention comprises a further step ix) of screening after optional step ii) or step i) or viii) and preferably before step iii) by use of one or more screens having an aperture size of 1 mm or coarser, preferably from 25 to 3 mm, more preferably from 20 to 5 mm, and most preferably from 15 to 8 mm and removing one or more undersize fractions passed said screen. For example, one or more screens having an aperture size of 10 mm is/are used and the undersize fractions retained by said screen/s is/are removed.

Alternatively, the process according to the present invention may comprise a further step x) of screening after optional step ii) or step i) and preferably before step iii) by use of one or more screens having an aperture size of 150 mm or finer, preferably from 100 to 10 mm, more preferably from 80 to 20 mm, and most preferably from 70 to 30 mm and removing one or more undersize fractions retained by said screen. For example, one or more screens having an aperture size of 50 mm is/are used and the undersize fractions retained by said screen/s is/are removed.

According to another embodiment of the present invention the process according to the present invention comprises a further step xi) of screening after step v) and preferably before step vi) by use of one or more screens having an aperture size of 1500 µm or finer, preferably from 1300 to 500 µm, more preferably from 1200 to 600 µm, and most preferably from 1100 to 750 µm and removing one or more oversize fractions retained by said screen.

The obtained fragmented natural calcium carbonate with a reduced content of impurities may be further processed, e.g, the fragmented natural calcium carbonate with a reduced content of impurities may be separated from the aqueous suspension and/or subjected to a washing step and/or a surface treatment step and/or a drying step.

The fragmented natural calcium carbonate with a reduced content of impurities may be separated from the aqueous composition by any conventional means of separation known to the skilled person.

According to one embodiment of the present invention, the process according to the present invention further comprises a step of mechanically dewatering, preferably by centrifugation or filtration, the fragmented natural calcium carbonate with a reduced content of impurities. Examples of mechanical dewatering processes are filtration, e.g. by means of a drum filter or filter press, nanofiltration, or centrifugation. Alternatively, dewatering may be performed thermally. An example for a thermal dewatering process is a concentrating process by the application of heat, for example, in an evaporator. According to a preferred embodiment, the mechanically dewatering, is done by filtration and/or centrifugation.

According to one embodiment of the present invention, the process further comprises a step of washing the fragmented natural calcium carbonate with a reduced content of impurities with water, especially, if the separation step vi) is done by froth flotation with a collector agent. The fragmented natural calcium carbonate with a reduced content of impurities may be washed with water and/or a suitable solvent, preferably water. Suitable solvents are known in the art and are, for example, aliphatic alcohols, ethers and diethers having from 4 to 14 carbon atoms, glycols, alkoxylated glycols, glycol ethers, alkoxylated aromatic alcohols, aromatic alcohols, mixtures thereof, or mixtures thereof with water. For example, the fragmented natural calcium carbonate with a reduced content of impurities can be washed one time, two times or three times with water and/or a suitable solvent, preferably water.

After separation, the fragmented natural calcium carbonate with a reduced content of impurities can be dried in order to obtain a dried fragmented natural calcium carbonate with a reduced content of impurities. According to one embodiment of the process of the present invention the drying can be performed at a temperature in the range from 60 to 200°C and preferably in the range of from 80 to 150 °C. Preferably, the drying is performed until the moisture content of the dried fragmented natural calcium carbonate with a reduced content of impurities is between 0.01 and 5 wt.-%, based on the total weight of the dried fragmented natural calcium carbonate with a reduced content of impurities.

In general, the drying step may take place using any suitable drying equipment and can, for example, include thermal drying and/or drying at reduced pressure using equipment such as an evaporator, a flash drier, an oven, a spray drier and/or drying in a vacuum chamber. The drying step can be carried out at reduced pressure, ambient pressure or under increased pressure. For temperatures below 100°C it may be preferred to carry out the drying step under reduced pressure.

### Fragmented natural calcium carbonate with a reduced content of impurities

A fragmented natural calcium carbonate with a reduced content of impurities is obtainable by the process according to the present invention.

More precisely, a fragmented natural calcium carbonate with a reduced content of impurities is obtainable by the process comprising the following steps:
i) providing at least one natural calcium carbonate and impurities containing material,
ii) optionally crushing the material of step i),
iii) providing an aqueous solvent,
iv) contacting the crushed material of step ii) or the material of step i) with the aqueous solvent of step iii) to prepare an aqueous composition,
v) subjecting the aqueous composition of step iv) to a high voltage pulse fragmentation by use of a high voltage fragmentation apparatus, wherein the applied voltage is in the range of 100 to 250 kV, the pulse rate is in the range of 0.2 to 7.0 Hz, the distance between the electrodes of the apparatus is in the range of 10 to 300 mm and between 100 to 700 pulses per kg natural calcium carbonate and impurities containing material are applied and
vi) separating, in one or more steps, the impurities from the fragmented aqueous composition to obtain fragmented natural calcium carbonate having a reduced content of impurities.

According to one embodiment the fragmented natural calcium carbonate with a reduced content of impurities is in the form of particles having a top cut particle size *d*₉₈ of 100 to 3000 µm, preferably 200 to 2500 µm, and most preferably 250 to 2000 µm.

### Use of the fragmented natural calcium carbonate with a reduced content of impurities

The fragmented natural calcium carbonate with a reduced content of impurities obtainable by the process according to the present invention may be used in paper, plastics, paint, coatings, concrete, cement, cosmetic, water treatment and/or agriculture applications, wherein the fragmented natural calcium carbonate with a reduced content of impurities in paper is preferably used in a wet end process of a paper machine, in cigarette paper, board, and/or coating applications, or as a support for rotogravure and/or offset and/or ink jet printing and/or continuous ink jet printing and/or flexography and/or electrophotography and/or decoration surfaces.

### Use of a high voltage fragmentation apparatus for reducing impurities in at least one natural calcium carbonate and impurities containing material

According to the present invention use of a high voltage fragmentation apparatus for reducing impurities in at least one natural calcium carbonate and impurities containing material is provided by subjecting said material to
A) a high voltage pulse fragmentation by use of the high voltage fragmentation apparatus, wherein the applied voltage is in the range of 100 to 250 kV, the pulse rate is in the range of 0.2 to 7.0 Hz, the distance between the electrodes of the apparatus is in the range of 10 to 300 mm and between 100 to 700 pulses per kg natural calcium carbonate and impurities containing material are applied and
B) separating, in one or more steps, the impurities from the fragmented natural calcium carbonate and impurities containing material to obtain fragmented natural calcium carbonate having a reduced content of impurities.

According to the present invention the natural calcium carbonate and impurities containing material is not ground prior and during separation step B).

### Experiments

### 1 Measurement methods

### Particle size distribution (mass % particles with a diameter < X) and top cut particle size (d₉₈) of particulate material

The Particle Size Distribution (PSD) and the correlating top cut particle size *d*₉₈ were measured by sieving according to DIN 66165-1:2016-08 part 1 and part 2. Sieving is performed with test sieves with metal wire cloths according to ISO 3310-1:2001-09 part 1 (ISO 3310-1:2000).

### Weight solids (wt.-%) of a material in slurry.

The weight solids were determined by dividing the weight of the solid material by the total weight of the aqueous slurry. The weight of the solid material is determined by weighing the solid material obtained by evaporating the aqueous phase of slurry and drying the obtained material to a constant weight.

### Determination of the impurities content

0.5 g of the natural calcium carbonate and impurities containing mineral, of the natural calcium carbonate or of the impurities are analyzed by X-ray diffraction (XRD). Samples are first milled in a lab disk mill from Retsch and dried in a dryer at 60°C for 20 to 40 minutes. Samples were analyzed with a Bruker D8 Advance powder diffractometer obeying Bragg's law. This diffractometer consists of a 2.2 kW X-ray tube, a sample holder, a *θ*-*θ* goniometer, and a VÅNTEC-1 detector. Nickel-filtered Cu Kα radiation was employed in all experiments. The profiles were chart recorded automatically using a scan speed of 0.7° per minute and a step size of 0.007° in 2θ. The resulting powder diffraction patterns were classified by mineral content using the DIFFRAC^{plus} software packages EVA and SEARCH, based on reference patterns of the ICDD PDF 2 database. Quantitative analysis of diffraction data refers to the determination of amounts of different phases in a multi-phase sample and is performed using the DIFFRAC^{plus} software package TOPAS.

### 2 Crushed natural calcium carbonate and impurities containing material

For examples 1 to 3 calcite marbles are used as natural calcium carbonate and impurities containing material. The calcite marble comprises dependent on the examples different amounts of impurities as can be seen in the table below. The amount of impurities is given in wt.-% based on the total weight of the natural calcium carbonate and impurities containing material. The material is crushed with a jaw crusher BB300 from Retsch and screened according to DIN Standard 66165-1:2016-08, to 0 to 40 mm on a 40 mm screen according to ISO Standard 3310-1:2000 and afterwards to 10 to 40 mm on a 10 mm screen according to ISO Standard 3310-1:2000. The obtained crushed natural calcium carbonate and impurities containing material with a top cut particle size *d*₉₈ of 40 mm is used in examples 1 to 3.

| Example | Impurities |
|---|---|
| 1 | 1.5 wt.-%: mainly non-coloring silicates such as white mica, and quartz, (1.18 wt.-%) and coloring iron sulphide minerals such as pyrite (0.36 wt.-%) |
| 2 | 0.4 wt.-%: mainly silicates such as mica, feldspar and quartz, and iron sulphide minerals such as pyrite |
| 3 | 0.6 wt.-%: mainly silicates such as mica, feldspar and quartz, and iron sulphide minerals such as pyrite |

### 3 Examples

### Example 1

500 g of the crushed natural calcium carbonate and impurities containing material were placed in 10 Liter reaction vessel and immersed with demineralized water such that the pulsing electrodes of the Selfrag equipment (Selfrag Lab S2.1 Labor Fragmentieranlage) are in contact with demineralized water. High-voltage fragmentation was carried out with a pulse rate of 2 Hz, applied voltage of 170 kV (kilovolt), and an initial electrode distance of 40 mm, said electrode distance being decreased to 20 mm, over the applied 80 pulses, yielding a fragmented natural calcium carbonate and impurities containing material of 0 to 2000 µm with a *d*₅₀ of about 450 µm and a top cut particle size *d*₉₈ of 2000 µm. The thus obtained fragmented natural calcium carbonate and impurities containing material was screened according to DIN Standard 66165-1:2016-08 on a 1 mm screen according to ISO Standard 3310-1:2000 and afterwards dried, thereby obtaining a 0 to 1000 µm fragmented natural calcium carbonate and impurities containing material fraction.

The fragmented natural calcium carbonate and impurities containing material fraction was mixed with water to obtain an aqueous slurry having a solids content of 14 wt.-%, based on the fragmented natural calcium carbonate and impurities containing material. Said aqueous slurry was submitted to a rotating fluidized bed concentrating system L40 from Falcon for density sorting operated in batch mode. The drum rotational speed was equivalent to the centrifugal acceleration of 200 g, and the slurry feed flow was about 2 Liter per minute, and the fluidization flow was about 4 Liter per minute. The results of the sorting are shown in the table below. About 69 wt.-% of recovery of pyrite to tailings and about 5.6 wt.- % of loss of non-coloring minerals (carbonates and silicates) to tailing can be observed. It is evident that there is a significant difference in the recoveries of non-coloring silicate minerals (e.g. white mica) and of coloring iron sulphide minerals (e.g. pyrite) according to their different densities.

| Example 1 | | | |
|---|---|---|---|
| Density sorting by rotating fluidized bed concentrator (Falcon L40) | | | |
| Variable | Feed (wt.-%) | Concentrate (wt.-%) | Tailings (wt.-%) |
| Natural calcium carbonate content | 98.46 % | 98.8 % | 92.9 % |
| Impurities content | 1.54 % | 1.20 % | 7.11 % |
| Silicate minerals content | 1.18 % | 1.08 % | 2.83 % |
| Pyrite content | 0.36 % | 0.12 % | 4.28 % |
| | | | |
| Mass recovery | 100 % | 94.2 % | 5.8 % |
| Natural Calcium carbonate recovery | 100 % | 94.5 % | 5.5 % |
| Impurities recovery | 100 % | 73.2 % | 26.8 % |

As can be seen from example 1, by the process according to the present invention the preparation of a fragmented natural calcium carbonate with a reduced content of impurities is possible since the amount of natural calcium carbonate can be increased from 98.46 wt.-% to 98.8 wt.-%.

### Example 2

500 g of the crushed natural calcium carbonate and impurities containing material were placed in 10 Liter reaction vessel and immersed with demineralized water such that the pulsing electrodes of the Selfrag equipment (Selfrag Lab S2.1 Labor Fragmentieranlage) are in contact with demineralized water. High-voltage fragmentation was carried out with a pulse rate of 1 Hz, applied voltage of 160 kV (kilovolt), and an initial electrode distance of 40 mm, said electrode distance being decreased to 20 mm, over the applied 150 pulses, yielding a fragmented natural calcium carbonate and impurities containing material of 0 to 2000 µm with a *d*₅₀ of about 290 µm and a top cut particle size *d*₉₈ of 2000 µm. The thus obtained fragmented natural calcium carbonate and impurities containing material was screened according to DIN Standard 66165-1:2016-08 on a 800 µm screen according to ISO Standard 3310-1:2000 and afterwards dried, thereby obtaining a 0 to 800 µm fragmented natural calcium carbonate and impurities containing material fraction.

The fragmented natural calcium carbonate and impurities containing material fraction was mixed with water to obtain an aqueous slurry which was directly submitted to froth flotation (reverse flotation, wherein the recovered impurities form the froth correspond to the tailing). The result of the flotation is shown in the table below. About 78wt.-% of recovery of impurities to tailings (froth) and about 2 wt.-% of loss of natural calcium carbonate to tailing can be observed.

| Example 2 | | | |
|---|---|---|---|
| Flotation | | | |
| | Feed (wt.-%) | Concentrate (wt.-%) | Tailings (wt.-%) |
| Impurities | 0.44 % | 0.10 % | 13.75 % |
| Mass recovery | 100.00 % | 97.51 % | 2.49 % |
| Recovery of Impurities | 100.00 % | 22.16 % | 77.84 % |
| Recovery of natural calcium carbonate | 100.00 % | 97.84 % | 2.16 % |

As can be seen from example 2, by the process according to the present invention the preparation of a fragmented natural calcium carbonate with a reduced content of impurities is possible since the amount of impurities can be decreased from 0.44 wt.-% to 0.1 wt.-%.

### Example 3

500 g of the crushed natural calcium carbonate and impurities containing material were placed in 10 Liter reaction vessel and immersed with demineralized water such that the pulsing electrodes of the Selfrag equipment (Selfrag Lab S2.1 Labor Fragmentieranlage) are in contact with demineralized water. High-voltage fragmentation was carried out with a pulse rate of 1 Hz, applied voltage of 160 kV (kilovolt), and an initial electrode distance of 40 mm, said electrode distance being decreased to 20 mm, over the applied 150 pulses, yielding a fragmented natural calcium carbonate and impurities containing material of 0 to 2 mm with *d*₅₀ of about 290 µm and a top cut particle size *d*₉₈ of 2000 µm. The thus obtained fragmented natural calcium carbonate and impurities containing material was screened according to DIN Standard 66165-1:2016-08 on a 800 µm screen according to ISO Standard 3310-1:2000 and afterwards dried, thereby obtaining a 0 to 800 µm fragmented natural calcium carbonate and impurities containing material fraction.

The fragmented natural calcium carbonate and impurities containing material fraction was used as a feed for density sorting on a Holman-Wilfley 800 shaking table, with a slope in axial direction of about -0.6 °, a slope in transversal direction of about -6.5 °, with maximum stroke frequency and maximum stroke length, with a feed rate of dry calcite marble of about 56 gram per minute, and total water flow rate of about 10.7 Litre per minute, setting the position of splitter plates for three outlet streams (light fraction (66 cm), medium fraction (55 cm) and heavy fraction (perpendicular to the axial slope direction)) as shown in Figure 1. The result of the shanking table are shown in the table below. As can be seen about 36 wt.-% of recovery of impurities to heavy fraction whereas only about 24 wt.-% of the natural calcium carbonate report to this fraction. About 58 wt.-% of recovery of natural calcium carbonate to the medium fraction while only about 35 wt.-% of the impurities report to this fraction. About 29 wt.-% of recovery of impurities contribute to the light fraction whereas only about 17 wt.-% of natural calcium carbonate report to this fraction.

| Example 3 | | | | |
|---|---|---|---|---|
| Densitiy sorting on Holman-Wilfley 800 shaking table | | | | |
| | Feed (wt.%) | Light fraction (wt.-%) | Medium fraction (wt.-%) | Heavy fraction (wt.-%) |
| Impurities content | 0.57 % | 0.97 % | 0.34 % | 0.84 % |
| Mass recovery | 100.00 % | 17.34 % | 58.20 % | 24.46 % |
| Impurities recovery | 100.00 % | 29.34 % | 34.63 % | 35.95 % |

As can be seen from example 3, by the process according to the present invention the preparation of a fragmented natural calcium carbonate with a reduced content of impurities is possible since the amount of impurities can be decreased from 0.57 wt.-% to 0.34 wt.-%in the medium fraction.

## Claims

1. Process for the preparation of fragmented natural calcium carbonate with a reduced content of impurities comprising the following steps:
i) providing at least one natural calcium carbonate and impurities containing material,
ii) optionally crushing the material of step i),
iii) providing an aqueous solvent,
iv) contacting the crushed material of step ii) or the material of step i) with the aqueous solvent of step iii) to prepare an aqueous composition,
v) subjecting the aqueous composition of step iv) to a high voltage pulse fragmentation by use of a high voltage fragmentation apparatus, wherein the applied voltage is in the range of 100 to 250 kV, the pulse rate is in the range of 0.2 to 7.0 Hz, the distance between the electrodes of the apparatus is in the range of 10 to 300 mm and between 100 to 700 pulses per kg natural calcium carbonate and impurities containing material are applied and
vi) separating, in one or more steps, the impurities from the fragmented aqueous composition to obtain fragmented natural calcium carbonate having a reduced content of impurities.

2. Process according to claim 1, wherein the material of step i) is not ground prior and during separation step vi).

3. Process according to any one of the preceding claims, comprising a further step vii) of grinding the fragmented natural calcium carbonate having a reduced content of impurities obtained from step vi) preferably in the presence of at least one grinding aid agent.

4. Process according to any one of the preceding claims, wherein the amount of calcium carbonate in the natural calcium carbonate and impurities containing material of step a) is from 80.0 to 99.9 wt.-%, based on the dry weight of the natural calcium carbonate and impurities containing material, preferably from 90.0 to 99.5 wt.-%, more preferably from 95.0 to 99.3 wt.-% and most preferably from 98.0 to 99.0 wt.-%, based on the dry weight of the natural calcium carbonate and impurities containing material.

5. Process according to any one of the preceding claims, wherein the crushing in step ii) is performed in one or more crushers selected from the group consisting of a jaw crusher, a gyratory crusher, a cone crusher, a compound crusher, an impact crusher, a hammer mill and a mineral sizer and preferably is performed in a jaw crusher.

6. Process according to any one of the preceding claims, wherein the aqueous solvent of step iii) consists of water.

7. Process according to any one of the preceding claims, wherein
a) the applied voltage is in the range of 120 to 220 kV, preferably in the range of 140 to 200 kV and most preferably in the range of 150 to 180 kV and/or
b) the pulse rate is in the range of 0.5 to 5.0 Hz, preferably in the range of 0.6 to 4.0 Hz and most preferably in the range of 0.9 to 3.0 Hz and/or
c) the distance between the electrodes of the apparatus is in the range of 15 to 200 mm, preferably in the range of 18 to 100 mm and most preferably in the range of 20 to 40 mm and/or
d) between 120 to 500 pulses per kg natural calcium carbonate and impurities containing material are applied, preferably between 140 to 400 and most preferably between 150 to 320.

8. Process according to any one of the preceding claims, wherein the fragmented material obtained in step v) is in the form of particles having a top cut particle size *d*₉₈ of 100 to 3000 µm, preferably 200 to 2500 µm, and most preferably 250 to 2000 µm.

9. Process according to any one of the preceding claims, wherein the separation in step vi) is performed in one or more separators selected from the group consisting of density separators, preferably rotating fluidized bed concentrators or shaking tables, froth flotators, sensor based sorters, preferably X-ray sorters, near infrared sorters or optical sorters, electrostatic separators and/or magnetic separators and preferably is performed in a froth flotator.

10. Fragmented natural calcium carbonate with a reduced content of impurities obtainable by the process according to any of claims 1 to 9.

11. Use of the fragmented natural calcium carbonate with a reduced content of impurities obtainable by the process according to any of claims 1 to 9 in paper, plastics, paint, coatings, concrete, cement, cosmetic, water treatment and/or agriculture applications, wherein the fragmented natural calcium carbonate with a reduced content of impurities in paper is preferably used in a wet end process of a paper machine, in cigarette paper, board, and/or coating applications, or as a support for rotogravure and/or offset and/or ink jet printing and/or continuous ink jet printing and/or flexography and/or electrophotography and/or decoration surfaces.

12. Use of a high voltage fragmentation apparatus for reducing impurities in at least one natural calcium carbonate and impurities containing material by subjecting said material to
A) a high voltage pulse fragmentation by use of the high voltage fragmentation apparatus, wherein the applied voltage is in the range of 100 to 250 kV, the pulse rate is in the range of 0.2 to 7.0 Hz, the distance between the electrodes of the apparatus is in the range of 10 to 300 mm and between 100 to 700 pulses per kg natural calcium carbonate and impurities containing material are applied and
B) separating, in one or more steps, the impurities from the fragmented natural calcium carbonate and impurities containing material to obtain fragmented natural calcium carbonate having a reduced content of impurities.
